# EUROPÄISCHE PATENTSCHRIFT

(11) **EP 2 322 915 B1**
(45) Veröffentlichungstag und Bekanntmachung des Hinweises auf die Patenterteilung: **05.08.2020**
(21) Anmeldenummer: 10191409.1
(22) Anmeldetag: 16.11.2010
(51) Int. Cl.: G01N 21/88, G01B 11/25, G01B 21/20

(54) **Vorrichtung und Verfahren zur Erzeugung eines räumlich und/oder zeitlich veränderbaren Wärmestrahlungsmusters für die Deflektometrie, und deflektometrische Vorrichtung.**
Apparatus and method for creating a variable spatial and/or temporal thermal radiation pattern for deflectometry, and deflectometric apparatus.
Appareil et procédé pour créer un motif de rayonnement thermique variable dans l'espace et/ou dans le temps pour la déflectométrie, et appareil de déflectométrie.

(30) Priorität: 16.11.2009 DE 102009053510
(43) Veröffentlichungstag der Anmeldung: 18.05.2011
(73) Patentinhaber: Fraunhofer-Gesellschaft zur Förderung der Angewandten Forschung e.V., 80686 München (DE); Karlsruher Institut für Technologie, 76131 Karlsruhe (DE)
(72) Erfinder: Heizmann, Michael, 76131 Karlsruhe (DE); Werling, Stefan, 76770 Hatzenbühl (DE); Beyerer, Jürgen, 69234 Diehlheim (DE)
(74) Vertreter: Zimmermann, Tankred Klaus

(56) Entgegenhaltungen:
- WO-A1-2005/031251
- WO-A2-03/061891
- JP-A- 2 010 602
- US-A- 3 735 137
- US-A- 4 328 411
- US-B1- 6 239 436

## Beschreibung

Die vorliegende Erfindung betrifft Vorrichtungen und Verfahren zur Erzeugung eines räumlich und/oder zeitlich veränderbaren thermischen Strahlungsmusters zur deflektometrischen Untersuchung von Oberflächen.

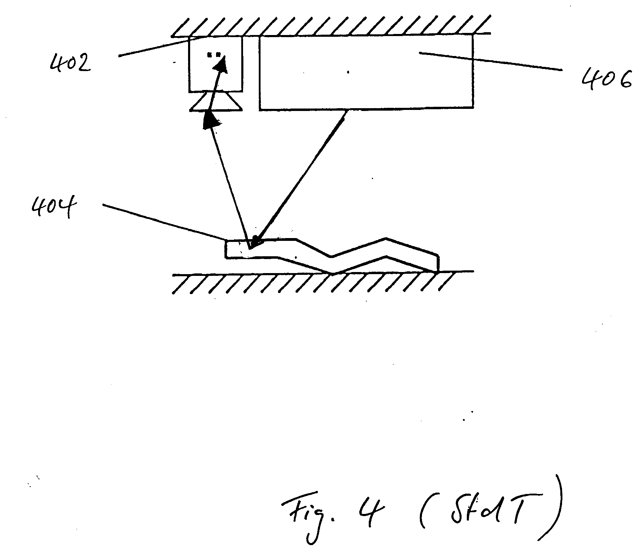

Die Erkennung von Oberflächenstrukturen und Defekten spielt bei der Prozess- und Qualitätskontrolle eine wichtige Rolle. Die Spiegelung z. B. eines Streifenmusters in einer glänzenden Oberfläche macht Formabweichungen und Fehler im reflektierten Licht sichtbar. Die Analyse der Spiegelbilder erlaubt die sichere Erkennung von Formabweichungen und Defekten auf der Oberfläche. Die optische Inspektion von spiegelnden Freiformflächen erfolgt durch Verfahren, die auch als "Deflektometrie" bezeichnet werden und welche schematisch anhand von Fig. 4 beschrieben werden können.

Das deflektometrische Messprinzip besteht darin, dass beispielsweise ein System gerader Streifen mit einer sinusförmigen Helligkeitsverteilung von einem Mustererzeuger 406 generiert wird, das über eine zu prüfende Objektoberfläche 404 beobachtet wird. Auf dem Objekt vorhandene Krümmungen der Oberfläche 404 deformieren die lineare Ausrichtung der Streifen und ergeben ein mehr oder weniger verformtes Bild. Die reflektierten Streifen werden mit einer Kamera 402 aufgenommen. Als Messdaten können die Zuordnungen von Beobachtungsstrahlen zu den jeweils beobachteten Orten auf dem Mustererzeuger ausgewertet werden. Diese werden in einem Rechner mit einer speziellen Software verarbeitet. Bei der Analyse der Bilddaten können unterschiedliche Fehler sicher erkannt und eindeutig unterschieden werden. Während eine Delle eine geringe Änderung der Oberflächenkrümmung über einen vergleichsweise großen Bereich verursacht, ist die Krümmungsänderung bei einem Einschluss über einen kleinen Bereich sehr groß. Daher müssen die eingesetzten Algorithmen zur automatischen Fehlerbewertung und Klassifizierung an die Aufgabenstellung angepasst sein.

Deflektometrische Verfahren dienen zur Inspektion von mindestens teilweise spiegelnd reflektierenden Objekten. Dabei werden an sich bekannte Muster, die auf dem Mustererzeuger 406 dargestellt werden, über die zu prüfende Oberfläche 404 von dem Bilderfassungssystem 402 beobachtet. Aufgrund der spiegelnden (gerichteten) Reflexion der Muster an der Prüfobjektoberfläche 404 gemäß dem Reflexionsgesetz kann von der Beobachtung auf die Oberfläche zurückgeschlossen werden.

Klassische deflektometrische Verfahren versagen allerdings bei ungerichtet bzw. diffus reflektierenden Oberflächen, da dort der Anteil spiegelnd reflektierten Lichts zu gering ist. Ungerichtet bzw. diffus reflektierende Oberflächen in diesem Sinne sind beispielsweise unlackierte Bleche in der Automobilindustrie.

Die Reflexion von elektromagnetischer Strahlung an rauen Oberflächen ist wellenlängenabhängig. Es ist bekannt, dass der Anteil spiegelnd reflektierter Strahlung mit steigender Wellenlänge ansteigt. Raue Oberflächen, wie z.B. unlackierte Bleche, weisen daher im thermischen Spektralbereich mit Wellenlängen größer als 1,2 µm zumindest teilweise spiegelnd reflektierende Eigenschaften auf (P. Beckmann und A. Spizzichino: "The Scattering of Electromagnetic Waves from Rough Surfaces", Pergamon Press, New York 1963). Zur deflektometrischen Inspektion rauer Oberflächen, d. h. beispielsweise mit einer Rauheit von größer ca. 1 µm, besteht somit die prinzipielle Möglichkeit, die spiegelnde Reflexion von thermischen Strahlungsmustern bzw. Wärmemustern an der rauen Objektoberfläche beispielsweise mittels Infrarot-Kameras zu beobachten.

Eine wesentliche praktische Schwierigkeit der Infrarot- oder thermischen Deflektometrie besteht in der Erzeugung von variablen, d. h. von über einen längeren Zeitraum konstant dargestellten, aber unterschiedlich vordefinierbaren, und dynamischen, d. h. in kurzen Zeiträumen dargestellten, veränderlichen Mustern im thermischen Spektralbereich elektromagnetischer Strahlung.

In DE 198 21 059 C2 werden Verfahren und Vorrichtungen zur Erfassung von Formabweichungen von Objekten beschrieben. In R. Höfling, P. Aswendt und R. Neugebauer: "Phase reflection - a new solution for the detection of shape defects on car body sheets", Optical engineering 39 (1), S. 175-182, January 2000 wird das Verfahren genauer dargestellt. Es wird gezeigt, dass mit Hilfe von Phasenschiebeverfahren und langwelligen Sinusmustern das deflektometrische Prinzip auch bei teilspiegelnden Oberflächen angewandt werden kann. Weiter wird gezeigt, dass die beobachteten Muster aufgrund der diffusen Streuung schwachen Kontrast besitzen. In DE 103 45 586 B4 wird ein Verfahren und eine Vorrichtung zum Bestimmen der Struktur einer Oberfläche beschrieben. Dabei beobachten eine oder mehrere Kameras Strukturen unterschiedlicher Breite, die vorzugsweise mittels eines Flüssigkristall- bzw. LCD-Monitors oder Plasmaschirm dargestellt werden, über die zu bestimmende spiegelnde Oberfläche. Die Anwendbarkeit des Verfahrens für die Strukturbestimmung von matten Oberflächen durch Beobachtung von Mustern im infraroten Spektralbereich wird zwar behauptet, jedoch die Erzeugung von Infrarotmustern, besonders im thermischen Infrarot, nicht behandelt.

In der Literatur ist darüber hinaus eine Vielzahl deflektometrischer Verfahren für die Inspektion spiegelnder Oberflächen bekannt. Diese lassen sich hinsichtlich der Mustererzeugung einteilen in Verfahren, die mehrere Muster zur Codierung des Mustererzeugers benutzen und solche, die eine kalibrierte statische Szene benötigen. Bei den Verfahren mit mehreren dargestellten Mustern können im einzelnen Verfahren unterschieden werden, die
- eine kalibrierte Szene beobachten (S. Savares, M. Chen und P. Perona: "Local Shape from Mirror Reflections". International Journal of Computer Vision 64 (1), S. 31-67, 2005),
- auf einen Schirm projizierte Muster auswerten (S. Kammel: "Deflektometrische Untersuchung spiegelnd reflektierender Freiformflächen". Dissertation, Universität Karlsruhe (TH), Universitätsverlag Karlsruhe, Universität Karlsruhe, 2004), und
- auf einem LC-Display dargestellte Muster auswerten (M. Petz: "Rasterreflexions-Photogrammetrie - Ein neues Verfahren zur geometrischen Messung spiegelnder Oberflächen". Dissertation, Technische Universität Braunschweig, Shaker Verlag, Aachen 2006).

Die Verfahren können darüber hinaus unterschieden werden in solche, die eine Oberflächenrekonstruktion leisten, und in solche, die charakteristische Merkmale der spiegelnden Fläche, wie z.B. lokale Krümmungseigenschaften, evaluieren. Verfahren, die eine Oberflächenrekonstruktion leisten, lassen sich weiterhin einteilen in Verfahren mit mehreren Aufnahmepositionen (Stereomethoden), Minimierungsverfahren und Verfahren, die lokale, parametrisierte Oberflächenmodelle benutzen.

M. Petz und R. Tusch: "Rasterreflexions-Photogrammetrie zur Messung spiegelnder Oberflächen", Technisches Messen 71, S. 389-397, 2004 beschreibt ein Verfahren als "passive Rasterreflexions-Photogrammetrie", bei dem ein spiegelndes Objekt aus zwei unterschiedlichen Kamerapositionen beobachtet wird. Ein ähnliches Verfahren wird in T. Bonfort und P. Sturm: "Voxel Carving for Specular Surfaces". Techn. Ber., MOVI-GRAVIR-INRIA, Grenoble, France, 2003 als "Voxel Carving" vorgeschlagen. R. Kichingereder und K. Donner: "Stereo Vision on Specular Surfaces", Proceedings of IASTED Conference on Visualization, Imaging, and Image Processing, S. 335-339, 2004 beschreiben die Rekonstruktion einer B-Spline-Oberfläche aus zwei unterschiedlichen Beobachtungsrichtungen. Minimierungsverfahren werden in J.E. Solem, H. Anaes und A. Heyden: "A Variational Analysis of Shape from Specularities using Sparse Data", 3D Data Processing, Visualization, and Transmission 2004 und von Hicks und Perline in "The Fixed Surface Method for Catadioptric Sensor Design", Techn. Ber., Drexel University Department of Mathematics, 2004 dargestellt. In "Recovering Local Shape of a Mirror Surface from Reflection of a Regular Grid", Techn. Ber., California Institute of Technology/Oracle, 2004 stellen Savarese et al. einen lokalen Ansatz zur Bestimmung der Parameter eines Oberflächenmodells dritter Ordnung vor.

Als Beispiel der Evaluierung der lokalen Krümmungseigenschaften einer Oberfläche sind die Arbeiten von Kammel zu nennen (S. Kammel: "Deflektometrische Untersuchung spiegelnd reflektierender Freiformflächen. Dissertation, Universität Karlsruhe (TH), Universitätsverlag Karlsruhe, 2004).

In J. Horbach und S. Kammel: "Deflectometric inspection of diffuse surfaces in the farinfrared spectrum", Machine Vision Applicatons in Industrial Inspection XIII", J.R. Price and F. Meriaudeau (Hrsg.), Bd. 5679 d. Reihe Society of Photo-Optical Instrumentation Engineers (SPIE) Conference Series, S. 108-117, 2005 wird die Verwendung von Mustern im thermischen Spektralbereich zur deflektometrischen Sichtprüfung von rauen Oberflächen vorgeschlagen. Der dargestellte Versuchsaufbau besteht aus einem statischen Wärmemuster in Gestalt einer mit Klebeband beklebten Metallplatte, das mittels einer Linearachse bewegt wird. Eine Wärmebildkamera beobachtet über die raue Fläche dieses Wärmemuster. Der vorgeschlagene Aufbau löst das Problem eines variablen frei wählbaren thermischen Strahlungsmusters nicht und erfordert für die dynamische Anpassung des Musters darüber hinaus eine mechanische Verstellkomponente.

In B. Hils, T. Loffler, M. Thomson, W. von Spiegel, C. am Weg, T. May, H. Roskos, P. de Maagt, D. Doyle und R. Geckeler: "High-accuracy topography measurement of optically rough surfaces with THz radiation", Infrared and Millimeter Waves", 2007 and the 2007 15th International Conference on Terahertz Electronics. IRMMW-THz.Joint 32nd International Conference on, S. 907-908, 2007 wird die Verwendung von THz-Strahlung (TeraHertz) zur deflektometrischen Prüfung rauer Oberflächen vorgeschlagen. Die Erzeugung flächiger Muster im THz-Bereich wird jedoch nicht angesprochen.

Weitere Ansätze zur Erzeugung eines räumlich und/oder zeitlich veränderbaren, ggf. thermischen, Strahlungsmusters unter Verwendung von Bildschirmen sind z.B. in der US 3,735,137 A, der WO 2005/031251 A1 oder der US 6,239,436 B1 beschreiben.

Vor diesem Hintergrund besteht die Aufgabe der vorliegenden Erfindung darin, ein Konzept zum Bereitstellen von variablen und/oder dynamischen thermischen Strahlungsmustern für die Deflektometrie zu liefern.

Diese Aufgabe wird gelöst durch eine Vorrichtung zur Erzeugung eines räumlich und/oder zeitlich veränderbaren thermischen Strahlungsmusters zur deflektometrischen Untersuchung einer Oberfläche gemäß dem Patentanspruch 1, eine Vorrichtung zur deflektometrischen Untersuchung einer Oberfläche gemäß dem Patentanspruch 4, und durch ein Verfahren zur Erzeugung eines räumlich und/oder zeitlich veränderbaren thermischen Strahlungsmusters zur deflektometrischen Untersuchung einer Oberfläche gemäß dem Patentanspruch 5.

Der vorliegenden Erfindung liegt die Erkenntnis zugrunde, dass variable und/oder dynamische thermische Strahlungsmuster erzeugt werden können, indem zunächst ein variables und/oder dynamisches Muster mittels einer scharf gebündelten Strahlungsquelle, nämlich einem Laser, erzeugt wird. Anschließend wird das erzeugte variable und/oder dynamische Muster in den thermischen Spektralbereich für eine ungerichtete Abstrahlung des Musters als thermisches Strahlungsmuster konvertiert.

Mit Ausführungsbeispielen der vorliegenden Erfindung werden deflektometrische Konzepte zur Inspektion und Rekonstruktion von nur im thermischen Infrarot spiegelnd reflektierenden Oberflächen, wie z. B. unlackierten Blechen, ohne Einschränkung auf bestimmte Muster oder Auswerteverfahren industriell einsetzbar. Dabei erfolgt die Mustererzeugung dynamisch, d. h. Muster lassen sich schnell darstellen und Positionen auf dem Mustererzeuger lassen sich zeitlich codieren. Die dargestellten Muster sind außerdem frei wählbar, d. h. alle bekannten Codierungsverfahren lassen sich nutzen. Des Weiteren ist die Mustererzeugung effektiv, d. h. die erforderlichen Muster lassen sich sicher generieren, und effizient, d. h. mit geringer Komplexität und geringem Hardware-Aufwand.

Weitere Ausführungsbeispiele und Weiterbildungen der vorliegenden Erfindung sind Gegenstand der abhängigen Patentansprüche.

Bevorzugte Ausführungsbeispiele der vorliegenden Erfindung werden nachfolgend basierend auf den beiliegenden Figuren näher erläutert. Es zeigen:
- Fig. 1: eine Vorrichtung zur Erzeugung eines veränderbaren thermischen Strahlungsmusters;
- Fig. 2a: eine schematische Darstellung eines Beispiels, das nicht Teil der Erfindung ist, einer Vorrichtung zur Erzeugung eines veränderbaren thermischen Strahlungsmusters;
- Fig. 2b: eine schematische Darstellung einer Vorrichtung zur Erzeugung eines veränderbaren thermischen Strahlungsmusters gemäß der vorliegenden Erfindung;
- Fig. 3: eine schematische Darstellung einer Vorrichtung zur deflektometrischen Untersuchung einer Oberfläche gemäß einem Ausführungsbeispiel der vorliegenden Erfindung; und
- Fig. 4: eine schematische Darstellung einer herkömmlichen Vorrichtung zur deflektometrischen Untersuchung.

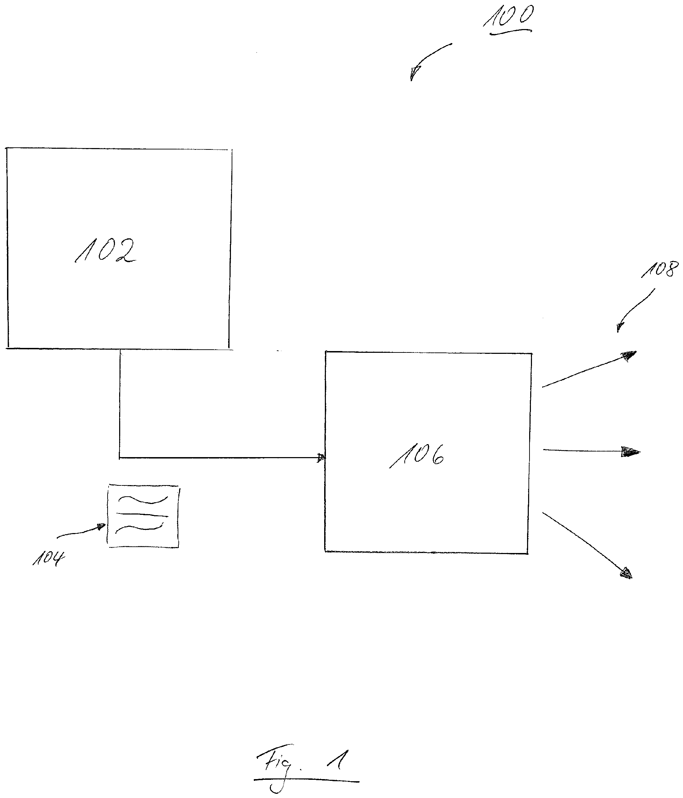

Fig. 1 zeigt ein schematisches Blockdiagramm einer Vorrichtung 100 zur Erzeugung eines räumlich und/oder zeitlich veränderbaren thermischen Strahlungsmusters gemäß einem Ausführungsbeispiel der vorliegenden Erfindung.

Die Vorrichtung 100 weist einen Mustererzeuger bzw. eine Strahlungsquelle 102 zum Erzeugen eines räumlich und/oder zeitlich veränderbaren Musters 104 auf. Die Strahlungsquelle 102 ist mit einer Einrichtung 106 zum Konvertieren des räumlich und/oder zeitlich veränderbaren Musters 104 gekoppelt, um das veränderbare Muster 104 in einen thermischen Spektralbereich für eine ungerichtete Abstrahlung des veränderbaren Musters 104 als thermisches Strahlungsmuster 108 zu konvertieren.

Gemäß einem Ausführungsbeispiel ist der Mustererzeuger bzw. die Strahlungsquelle 102 ausgebildet, um das veränderbare Muster 104 in einem Mustererzeugungsspektralbereich außerhalb des thermischen Spektralbereichs zu erzeugen. Dabei kann der Mustererzeugungsspektralbereich in einem für das menschliche Auge sichtbaren Spektralbereich oder in einem Nah-Infrarot-Spektralbereich liegen. Die Grenze zwischen sichtbarem Licht und Nah-Infrarot liegt bei Wellenlängen von ca. 800 nm, wobei der Nah-Infrarot-Spektralbereich im Sinne der vorliegenden Erfindung Wellenlängen in einem Bereich von ca. 780 bis ca. 1200 nm umfasst.

Als thermischer Spektralbereich soll hier der elektromagnetische Spektralbereich mit Wellenlängen größer als 1200 nm = 1,2 µm bezeichnet werden. Demgemäß ist die Einrichtung 106 zum Konvertieren gemäß Ausführungsbeispielen ausgebildet, um das veränderbare Muster 104 in einen Spektralbereich mit Wellenlängen oberhalb von 1,2 µm zu konvertieren und ungerichtet als thermisches Strahlungsmuster 108 abzustrahlen. Die Wellenlänge bzw. der Wellenlängenbereich, in den das veränderbare Muster 104 konvertiert wird, hängt im Wesentlichen von einer Oberflächenrauheit eines zu untersuchenden Messobjekts ab. Um ein spiegelndes Verhalten rauer Oberflächen zu gewährleisten, sollte die Wellenlänge der thermischen Strahlung größer als die mittlere Oberflächenrauheit bzw. größer als ein Vielfaches der mittleren Oberflächenrauheit sein. Die mittlere Oberflächenrauheit kann z. B. nach DIN 4760 definiert werden. Nimmt man Oberflächenrauheiten, beispielsweise von unlackierten Blechen in der Automobilindustrie, von 1 µm und mehr an, so ergeben sich dementsprechend Wellenlängen für die thermische Strahlung, die jeweils größer als die zu untersuchende Oberflächenrauheit sind.

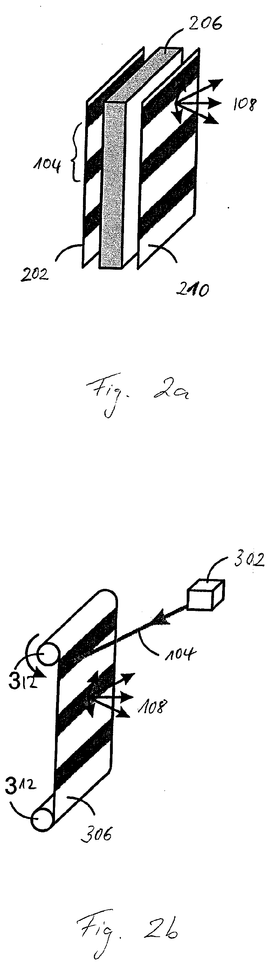

Gemäß einem Beispiel , das nicht Teil der Erfindung ist, ist der Mustererzeuger 102 zum Erzeugen des variablen, dynamischen Musters eine flächige Strahlungsquelle, wie beispielsweise ein Anzeigegerät basierend auf einer Projektions-, Flüssigkristall-, Plasma- oder LED-Technologie (Light Emitting Diode bzw. lichtemittierende Diode). Kommen dazu kommerziell verfügbare Anzeigegeräte zum Einsatz, wird in diesem Fall das gewünschte Muster 104 also zunächst im sichtbaren Bereich des elektromagnetischen Spektrums erzeugt, wie es in Fig. 2a schematisch gezeigt ist.

Die variable Mustererzeugung geschieht also beispielsweise mittels eines Monitors 202 oder eines Datenprojektors. Dieses angezeigte Muster (z. B. Streifenmuster) 104 wird dann von einer Konvertierungseinrichtung 206 in den thermischen Spektralbereich konvertiert, so dass als Ergebnis das gewünschte thermische Muster 108 auf einem Schirm, einem Widerstands-Array 210 etc. bereitsteht und ungerichtet bzw. überwiegend diffus abgestrahlt wird. Die Einrichtung 206 zum Konvertieren kann beispielsweise ein Widerstands-Array 210 sein, das opto-elektronisch ansteuerbar ist, um das Muster 104 von dem Anzeigegerät 202 optisch zu erfassen und in den thermischen Spektralbereich zu konvertieren, wobei Teilbereichen des Musters 104 ein oder mehrere Widerstandselemente des Widerstands-Arrays 210 zugeordnet sind. Die Einrichtung 206 zum Konvertieren kann auch auf ein Substrat aufgebrachte elektrisch leitfähige Schichten umfassen, die opto-elektronisch ansteuerbar sind, um das Muster 104 von dem Anzeigegerät 202 optisch zu erfassen und in den thermischen Spektralbereich zu konvertieren, wobei Teilbereiche des Musters 104 Teilbereichen der elektrisch leitfähigen Schichten zugeordnet sind. Durch z. B. ein Photosensor-Array, das eine wesentlich geringere Auflösung haben kann als das Anzeigegerät 202 (z. B. LED-Monitor) selbst, wird das angezeigte veränderbare Muster 104 also opto-elektronisch abgetastet. Dabei sind ein oder mehrere Photosensoren mit einem oder mehreren Widerständen des Widerstands-Arrays 210 bzw. Teilbereichen der elektrisch leitfähigen Schichten gekoppelt, um diese anzusteuern, wenn Licht auf entsprechend zugeordnete Photodetektoren fällt. Somit kann das Widerstands-Array bzw. die elektrisch leitfähigen Metallschichten indirekt durch das Anzeigegerät 202 angesteuert werden. Eine komplizierte Ansteuerung z. B. mit einer Adressierlogik für das Widerstands-Array selbst ist somit nicht nötig.

Soll das Muster 104 dynamisch verändert werden, so wird dem Mustergenerator, d. h. dem flächigen Anzeigegerät 202, im sichtbaren Spektralbereich das gewünschte neue Muster vorgegeben, das dann von der Konvertierungseinrichtung 206 in thermischen Spektralbereich konvertiert wird. In anderen Worten ausgedrückt werden die variablen, dynamischen Muster 104 mittels der Bildfläche des Monitors auf herkömmliche Weise veränderlich angezeigt und dann auf die oben beschriebene Art und Weise in den thermischen Spektralbereich konvertiert.

Die erfindungsgemäße Vorrichtung wird nun anhand der Fig. 2b detaillierter erläutert. Hier wird das gewünschte veränderbare Muster 104 mittels einer scharf gebündelten Strahlungsquelle auf einen Schirm 306 aufgebracht. Die scharf gebündelte Strahlungsquelle 302 ist in einem scannenden Verfahren in der Lage, Energie auf den Schirm 306 aufzubringen D.h., der Mustererzeuger 102 zum Erzeugen des veränderbaren Musters 104 umfasst gemäß der Erfindung eine scharf gebündelte Strahlungsquelle 302, um das veränderbare Muster 104 der Einrichtung 106, 306 zum Konvertieren bereitzustellen. Gemäß der Erfindung handelt es sich bei der scharf gebündelten Strahlungsquelle 302 um einen Laser mit dem das veränderbare Muster 104 generiert wird und der in einem scannenden Verfahren die Energie auf den Schirm 306 aufzubringen in der Lage ist. Die Einrichtung 106 zum Konvertieren umfasst gemäß der Erfindung einen strahlungsabsorbierenden Schirm 306, auf den das veränderbare Muster 104 mittels der scharf gebündelten Strahlungsquelle 302 aufgebracht werden kann, wobei der Schirm das aufgebrachte veränderbare Muster 104 in dem thermischen Spektralbereich als thermisches Strahlungsmuster 108 diffus abstrahlt.

Durch Konvektion und/oder Wärmestrahlung verschwindet das thermische Muster 108 auf dem Schirm 306 mit der Zeit und muss daher von Zeit zu Zeit aufgefrischt werden, wenn es über längere Zeit statisch vorhanden sein soll. Soll das thermische Muster 108 dynamisch verändert werden, so reicht es prinzipiell aus, die Auffrischung des Musters 104 auszusetzen und stattdessen ein neues, gewünschtes Muster 104 aufzubringen.

Gemäß der Erfindung wird jedoch das gewünschte veränderliche Muster 104 durch die scharf gebündelte Strahlungsquelle 302 auf einen beweglichen Schirm 306 in Gestalt eines Bandes, z.B. streifenförmig, aufgebracht . Dies ist vor allem dann vorteilhaft, wenn Konvektion und Wärmestrahlung nicht ausreichen, um einen gewünschten Musterwechsel in kurzer Zeit zu gewährleisten. Soll das Muster 104 dynamisch verändert werden, so wird ein Teil des Schirms 306, auf dem das bisher angezeigte Muster 104 als thermisches Strahlungsmuster 108 aufgebracht ist, beispielsweise mittels Transportrollen 312 so weit weitertransportiert, bis eine neue, unbeschriebene Fläche auf dem Schirm 306 zur Aufbringung eines neuen Musters 104 zur Verfügung steht. Dabei kann eine Regenerationszeit des Schirms 306 bzw. der Konvertierungseinrichtung 106 beschleunigt werden, indem der Schirm 306 über wärmeleitende Walzen bzw. Transportrollen 312 geführt wird.

Der Schirm 306 weist also gemäß der Erfindung eine Mehrzahl von Mustererzeugungsbereichen auf und ist derart beweglich, dass nach Aufbringen eines ersten veränderbaren Musters 104 auf einen ersten Mustererzeugungsbereich der Schirm 306 über die Rollen 312 so bewegt werden kann, dass ein zweites veränderbares Muster 104 auf einen zweiten von dem ersten Mustererzeugungsbereich verschiedenen Mustererzeugungsbereich aufgebracht werden kann. Dazu weist der Schirm 306 ein auf den Transportrollen 312 angeordnetes transportierbares Band auf, so dass unterschiedliche Mustererzeugungsbereiche auf dem Band angesteuert werden können.

Hierin beschriebene Beispiele, die nicht Teil der Erfindung sind, befassen sich also mit Verfahren und Vorrichtungen zur variablen und/oder dynamischen Mustererzeugung im thermischen Spektralbereich elektromagnetischer Strahlung mit mindestens einer flächigen Strahlungsquelle, die unterschiedliche Muster anzuzeigen in der Lage ist, wobei die Muster im thermischen Spektralbereich elektromagnetischer Strahlung frei wählbar und in kurzer zeitlicher Abfolge darstellbar sind. Die Generierung der Muster im thermischen Spektralbereich elektromagnetischer Strahlung kann durch Konvertierung eines flächig erzeugten veränderbaren Musters im sichtbaren Spektralbereich oder im Nah-Infrarot erfolgen. Dagegen erfolgt gemäß der vorliegenden Erfindung die Generierung des thermischen Strahlungsmusters mittels einer scharf gebündelten Energiequelle, die in einem scannenden Verfahren Energie auf einen Schirm aufzubringen in der Lage ist (Laser).

Gemäß Beispielen, die nicht Teil der Erfindung sind, kann die Konvertierungseinrichtung 106 beispielsweise durch ein Widerstands-Array oder durch auf einen Träger aufgebrachte leitfähige Schichten realisiert werden, die jeweils örtlich homogen oder inhomogen sein können und die ggf. durch einen Diffusor ergänzt werden. Gemäß Beispielen, die nicht Teil der Erfindung sind, kann die Konvertierungseinrichtung 106 auf opto-elektronischem Wege über eine oder mehrere flächige Strahlungsquellen (z.B. Monitor) im sichtbaren Spektralbereich oder im nahen Infrarot angesteuert werden. Gemäß einem Beispiel ist die flächige Strahlungsquelle eine Flüssigkristallanzeige (LC-Display). Gemäß einem weiteren Beispiel kann die flächige Strahlungsquelle einen Datenprojektor (Beamer) umfassen.

Für den Fall, dass als Energiequelle eine scharf gebündelte Strahlungsquelle in Form eines Lasers verwendet wird, ist der Schirm 306, der von der Energiequelle beschrieben wird, gemäß der vorliegenden Erfindung durch eine umlaufende Projektionsfläche realisiert.

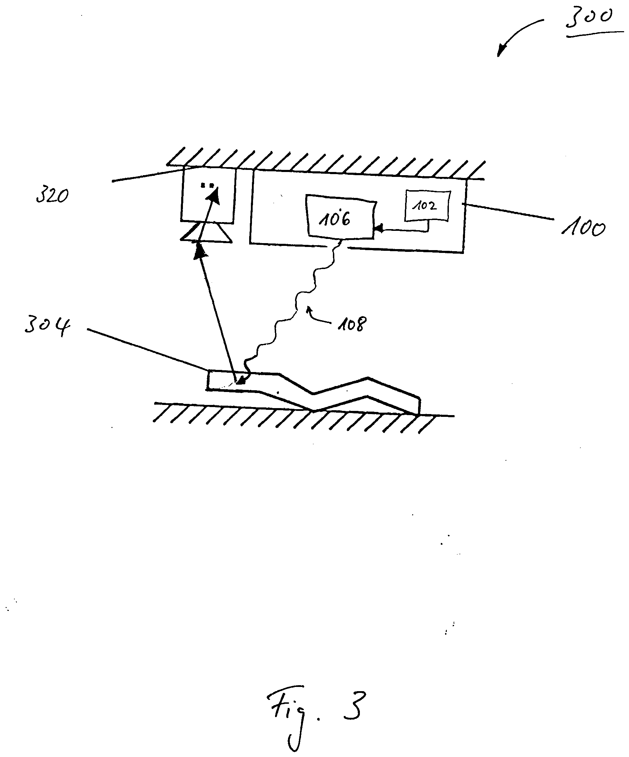

Die oben beschriebene Vorrichtung 100 zur Erzeugung eines räumlich und/oder zeitlich veränderbaren thermischen Strahlungsmusters 104 kann zur deflektometrischen Untersuchung einer Oberfläche verwendet werden. Dazu zeigt Fig. 3 schematisch eine Vorrichtung 300 zur deflektometrischen Untersuchung einer Oberfläche 304 gemäß der Erfindung.

Die Vorrichtung 300 umfasst eine erfindungsgemäße Vorrichtung 100 zur Erzeugung eines veränderbaren thermischen Strahlungsmusters 108 gemäß der obigen Beschreibung. Ferner umfasst die Vorrichtung 300 eine Einrichtung 320 zum Erfassen eines von der Oberfläche 304 reflektierten Teils des thermischen Strahlungsmusters 108, um auf Basis des reflektierten Teils die Oberfläche 304 zu untersuchen. Bei der Einrichtung 320 kann es sich gemäß Ausführungsbeispiel um eine Infrarot- oder Wärmebildkamera handeln.

Bei der deflektometrischen Untersuchung kann es sich beispielsweise um eine qualitative Bewertung von räumlichen Oberflächeneigenschaften der zu untersuchenden Oberfläche 304 handeln. Ebenso könnte die Untersuchung im Rahmen einer Rekonstruktion der 3D-Gestalt der Oberfläche 304 durchgeführt werden. Zur Untersuchung der Oberfläche 304 könnten auch mehrere steuerbare, flächige thermische Strahlungsquellen in verschiedenen Winkeln angeordnet werden, welche über die im thermischen Spektralbereich spiegelnde Oberfläche 304 beobachtet werden (photometrische Deflektometrie).

Obwohl manche Aspekte der vorliegenden Erfindung im Zusammenhang mit einer Vorrichtung bzw. im Zusammenhang mit einem oder als ein Verfahrensschritt beschrieben wurden, wird die Erfindung anhand der beigefügten Ansprüchen definiert.

## Patentansprüche

1. Vorrichtung (100) zur Erzeugung eines räumlich und/oder zeitlich veränderbaren thermischen Strahlungsmusters (108) zur deflektometrischen Untersuchung einer Oberfläche (304), mit
einer Strahlungsquelle (102; 302) zum Erzeugen eines veränderbaren Musters (104); und
einer Einrichtung (106; 306) zum Konvertieren des veränderbaren Musters (104) in einen thermischen Spektralbereich für eine ungerichtete Abstrahlung des veränderbaren Musters (104) als thermisches Strahlungsmuster (108),
wobei die Einrichtung (106; 306) zum Konvertieren einen strahlungsabsorbierenden Schirm (306) mit einer Mehrzahl von Mustererzeugungsbereichen aufweist,
**gekennzeichnet durch**
eine Transporteinrichtung für den Schirm (306), so dass der Schirm (306) derart beweglich ist, dass nach Aufbringen eines ersten Musters auf einen ersten Mustererzeugungsbereich der Schirm so bewegt werden kann, dass ein zweites Muster auf einen zweiten von dem ersten Mustererzeugungsbereich verschiedenen Mustererzeugungsbereich aufgebracht werden kann,
wobei die Transporteinrichtung Transportrollen (312) umfasst,
wobei der Schirm (306) ein Band, das eine umlaufende Projektionsfläche bildet, aufweist, das auf den Transportrollen (312) angeordnet ist, um durch die Transportrollen (312) transportiert zu werden,
wobei die Transporteinrichtung ausgebildet ist, um nach dem Aufbringen des ersten Musters (104) auf dem ersten Mustererzeugungsbereich den Schirm (306) für einen Musterwechsel über die Transportrollen (312) so weit weiterzubewegen, bis eine neue, unbeschriebene Fläche auf dem Schirm (306) zur Aufbringung des zweiten Musters (104) zur Verfügung steht, und
wobei die Strahlungsquelle zum Erzeugen des veränderbaren Musters (104) eine scharf gebündelte Strahlungsquelle (302) in Form eines Lasers umfasst, der ausgebildet ist, den Schirm (306) mit einem gewünschten Muster zu beschreiben.

2. Vorrichtung gemäß Anspruch 1, bei der die Transportrollen (312) wärmeleitende Transportrollen (312) umfassen.

3. Vorrichtung gemäß Anspruch 1 oder 2, wobei der Schirm (306) das aufgebrachte veränderbare Muster (104) in dem thermischen Spektralbereich als thermisches Strahlungsmuster (108) ungerichtet abstrahlt.

4. Vorrichtung (300) zur deflektometrischen Untersuchung einer Oberfläche (304), mit
einer Vorrichtung (100) zur Erzeugung eines veränderbaren thermischen Strahlungsmusters (108) gemäß einem der vorhergehenden Ansprüche; und
einer Einrichtung (320) zum Erfassen eines von der Oberfläche (304) reflektierten Teils des thermischen Strahlungsmusters, um auf Basis des reflektierten Teils die Oberfläche zu untersuchen.

5. Verfahren zur Erzeugung eines veränderbaren thermischen Strahlungsmusters zur deflektometrischen Untersuchung einer Oberfläche (304), mit folgenden Schritten:
Erzeugen eines veränderbaren Musters (104) auf einem strahlungsabsorbierenden Schirms (306), der eine Mehrzahl von Mustererzeugungsbereichen aufweist; und
Konvertieren des veränderbaren Musters (104) durch den strahlungsabsorbierenden Schirm (306) in einen thermischen Spektralbereich für eine ungerichtete Abstrahlung des veränderbaren Musters (104) als thermisches Strahlungsmuster (108),
wobei der Schirm (306) nach Aufbringen eines ersten Musters auf einen ersten Mustererzeugungsbereich durch eine Transporteinrichtung so bewegt wird, dass ein zweites Muster auf einen zweiten von dem ersten Mustererzeugungsbereich verschiedenen Mustererzeugungsbereich aufgebracht werden kann,
wobei der Schirm (306) ein Band, das eine umlaufende Projektionsfläche bildet, aufweist, das auf Transportrollen (312) der Transporteinrichtung angeordnet ist und
durch die Transportrollen (312) transportiert wird,
wobei der Schirm (306) nach dem Aufbringen des ersten Musters (104) auf dem ersten Mustererzeugungsbereich für einen Musterwechsel über die Transportrollen (312) so weit weiter bewegt wird, bis eine neue, unbeschriebene Fläche auf dem Schirm (306) zur Aufbringung des zweiten Musters (104) zur Verfügung steht, und
wobei ein gewünschtes Muster durch eine scharf gebündelte Strahlungsquelle (302) in Form eines Lasers auf den Schirm (306) geschrieben wird.

## Claims

1. Apparatus (100) for generating a spatially and/or temporally variable thermal radiation pattern (108) for deflectometrically examining a surface (304), comprising:
a radiation source (102; 302) for generating a variable pattern (104); and
means (106; 306) for converting the variable pattern (104) into a thermal spectral range for a non-directional emission of the variable pattern (104) as the thermal radiation pattern (108),
wherein the means (106; 306) for converting comprises a radiation-absorbent screen (306) with a plurality of pattern generation areas,
**characterized by**
transport means for the screen (306) so that the screen (306) is movable such that, after applying a first pattern onto a first pattern generation area, the screen may be moved so that a second pattern may be applied to a second pattern generation area that differs from the first pattern generation area,
wherein the transport means includes transport rollers (312),
wherein the screen (306) comprises a band forming a surrounding projection surface, arranged on the transport rollers (312) in order to be transported by the transport rollers (312),
wherein the transport means is configured, after applying the first pattern (104) onto the first pattern generation area, to further move the screen (306) for a pattern change via the transport rollers (312) until a new unwritten surface is available on the screen (306) for applying the second pattern (104), and
wherein the radiation source for generating the variable pattern (104) includes a sharply focused radiation source (302) in the form of a laser configured to write a desired pattern onto the screen (306).

2. Apparatus according to claim 1, wherein the transport rollers (312) include heat-conducting transport rollers (312).

3. Apparatus according to claim 1 or 2, wherein the screen (306) radiates in an non-directional manner the applied variable pattern (104) in the thermal spectral range as a thermal radiation pattern (108).

4. Apparatus (300) for deflectometrically examining a surface (304), comprising:
an apparatus (100) for generating a variable thermal radiation pattern (108) according to any one of the preceding claims; and
means (320) for capturing a part of the thermal radiation pattern reflected by the surface (304) in order to examine the surface on the basis of the reflected part.

5. Method for generating a variable thermal radiation pattern for deflectometrically examining a surface (304), comprising:
generating a variable pattern (104) on a radiation-absorbent screen (306) comprising a plurality of pattern generation areas; and
converting, by the radiation-absorbent screen (306), the variable pattern (104) into a thermal spectral range for a non-directional emission of the variable pattern (104) as the thermal radiation pattern (108),
wherein, after applying a first pattern onto a first pattern generation area, the screen (306) is moved by transport means such that a second pattern may be applied to a second pattern generation area that differs from the first pattern generation area,
wherein the screen (306) comprises a band forming a surrounding projection surface, arranged on transport rollers (312) of the transport means and being transported by the transport rollers (312),
wherein, after applying the first pattern (104) onto the first pattern generation area, the screen (306) is moved for a pattern change via the transport rollers (312) until a new unwritten surface is available on the screen (306) for applying the second pattern (104), and
wherein a desired pattern is written onto the screen (306) by a sharply focused radiation source (302) in the form of a laser.

## Revendications

1. Dispositif (100) pour générer un motif de rayonnement thermique variable dans l'espace et/ou dans le temps (108) pour l'examen déflectométrique d'une surface (304), avec
une source de rayonnement (102; 302) destinée à générer un motif variable (104); et
un moyen (106; 306) destiné à convertir le motif variable (104) en une zone spectrale thermique pour un rayonnement omnidirectionnel du motif variable (104) comme motif de rayonnement thermique (108),
dans lequel le moyen (106; 306) destiné à convertir présente un écran absorbant le rayonnement (306) avec une pluralité de zones de génération de motif,
**caractérisé par**
un moyen de transport pour l'écran (306) de sorte que l'écran (306) soit déplaçable de sorte que, après l'application d'un premier motif sur une première zone de génération de motif, l'écran puisse être déplacé de sorte qu'un deuxième motif puisse être appliqué sur une deuxième zone de génération de motif différente de la première zone de génération de motif,
dans lequel le moyen de transport comporte des rouleaux de transport (312),
dans lequel l'écran (306) présente une bande qui forme une surface de projection périphérique, qui est disposée sur les rouleaux de transport (312) pour être transportée par les rouleaux de transport (312),
dans lequel le moyen de transport est conçu pour déplacer, après l'application du premier motif (104) sur la première zone de génération de motif, l'écran (306) pour un changement de motif, par l'intermédiaire des rouleaux de transport (312), jusqu'à ce qu'une nouvelle surface sans inscription soit disponible à l'écran (306) pour appliquer le deuxième motif (104), et
dans lequel la source de rayonnement destinée à générer le motif variable (104) comporte une source de rayonnement hautement concentrée (302) sous forme de laser qui est conçu pour écrire un motif désiré sur l'écran (306).

2. Dispositif selon la revendication 1, dans lequel les rouleaux de transport (312) comportent des rouleaux de transport thermo-conducteurs (312).

3. Dispositif selon la revendication 1 ou 2, dans lequel l'écran (306) rayonne de manière omnidirectionnelle le motif variable appliqué (104) dans la zone spectrale thermique comme motif de rayonnement thermique (108).

4. Dispositif (300) pour l'examen déflectométrique d'une surface (304) avec
un dispositif (100) pour générer un motif de rayonnement thermique variable (108) selon l'une des revendications précédentes; et
un moyen (320) destiné à détecter une partie du motif de rayonnement thermique réfléchie par la surface (304) pour examiner la surface sur base de la partie réfléchie.

5. Procédé pour générer un motif de rayonnement thermique variable pour l'examen déflectométrique d'une surface (304), aux étapes suivantes consistant à:
générer un motif variable (104) sur un écran absorbant le rayonnement (306) qui présente une pluralité de zones de génération de motif; et
convertir le motif variable (104) par l'écran absorbant le rayonnement (306) en une zone spectrale thermique pour un rayonnement omnidirectionnel du motif variable (104) comme motif de rayonnement thermique (108),
dans lequel l'écran (306) est, après l'application d'un premier motif sur une première zone de génération de motif, déplacé par un moyen de transport de sorte qu'un deuxième motif puisse être appliqué sur une deuxième zone de génération de motif différente de la première zone de génération de motif,
dans lequel l'écran (306) présente une bande qui forme une surface de projection périphérique, qui est disposée sur des rouleaux de transport (312) du moyen de transport et est transportée par les rouleaux de transport (312),
dans lequel l'écran (306) est, après l'application du premier motif (104) sur la première zone de génération de motif, pour un changement de motif, déplacé par l'intermédiaire des rouleaux de transport (312) jusqu'à ce qu'une nouvelle surface sans inscription soit disponible à l'écran (306) pour appliquer le deuxième motif (104), et
dans lequel un motif souhaité est écrit sur l'écran (306) par une source de rayonnement hautement concentrée (302) sous forme de laser.
